(19) **Europäisches Patentamt / European Patent Office / Office européen des brevets**

(11) **EP 4 600 643 A1**

(12) **EUROPEAN PATENT APPLICATION**
published in accordance with Art. 153(4) EPC

(43) Date of publication:
**13.08.2025 Bulletin 2025/33**

(21) Application number: **22961460.7**

(22) Date of filing: **07.10.2022**

(51) International Patent Classification (IPC):
***G01N 33/48*** *(2006.01)*      ***G06T 7/00*** *(2017.01)*

(52) Cooperative Patent Classification (CPC):
**G01N 33/48; G06T 7/00**

(86) International application number:
**PCT/JP2022/037602**

(87) International publication number:
**WO 2024/075274 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NEC Corporation
108-8001 Tokyo (JP)**

(72) Inventor: **OMI, Yasuo
Tokyo 108-8001 (JP)**

(74) Representative: **Betten & Resch
Patent- und Rechtsanwälte PartGmbB
Maximiliansplatz 14
80333 München (DE)**

(54) **CELL CLASSIFICATION DEVICE, CELL CLASSIFICATION METHOD, AND PROGRAM**

(57)    In order to subject a specimen cell to classification as benign or malignant without any limitation to a specific method, a cell classification apparatus (1) includes: an acquisition means (10) for acquiring an image that includes at least one specimen cell as a subject; a determination means (20) for determining whether each of the at least one specimen cell is an individual cell or a massive cell; and a classification means (30) for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

FIG. 1

```
                    ┌─ 1
┌─────────────────────────────────┐
│ CELL CLASSIFICATION             │
│ APPARATUS                       │
│              ┌─ 10              │
│  ┌─────────────────────────┐    │
│  │ ACQUISITION             │    │
│  │ SECTION                 │    │
│  └─────────────────────────┘    │
│              ┌─ 20              │
│  ┌─────────────────────────┐    │
│  │ DETERMINATION           │    │
│  │ SECTION                 │    │
│  └─────────────────────────┘    │
│              ┌─ 30              │
│  ┌─────────────────────────┐    │
│  │ CLASSIFICATION          │    │
│  │ SECTION                 │    │
│  └─────────────────────────┘    │
└─────────────────────────────────┘
```

**EP 4 600 643 A1**

## Description

Technical Field

The present invention relates to a cell classification apparatus, a cell classification method, and a program.

Background Art

In a case where the presence of a mass is suspected by examination with X-rays, X-ray CT, or the like, it is common to carry out definitive diagnosis by pathological diagnosis. For example, a part of an organ tissue of a human body is collected as a specimen by puncture or the like, and diagnosis is carried out by microscopic observation of the specimen by an expert. In a specimen collection step, in some cases, it is quickly observed, in a treatment room in which specimen collection is carried out, whether a specimen includes a tissue cell that is suitable for pathological diagnosis. This is because a case where the specimen includes no tissue cell that is suitable for pathological diagnosis makes it necessary to collect a specimen again. However, specimen collection by puncture or the like is invasive, and it is not preferable to carry out specimen collection many times.

Rapid on-site cytologic evaluation (ROSE) is a method for quickly observing, in a treatment room in which specimen collection is carried out, whether a specimen collected includes a tissue cell that is suitable for pathological diagnosis and whether the specimen includes a malignant cell. For example, ROSE is used to carry out specimen collection from a respiratory system organ by puncture with use of an endoscope.

However, professional knowledge and experience are required to determine whether a collected cell is benign or malignant, and human resources of such skilled persons are limited. Thus, ROSE has such a problem that implementation thereof is limited despite the fact that usefulness such as a decrease in number of times of puncture and a reduction in risk of occurrence of complications has been reported. Under the circumstances, an attempt has been made such that a machine assisting in such determination allows even an unskilled person to make a diagnosis close to that made by a skilled person.

For example, Patent Literature 1 discloses a technique in which a morphological feature of a cell is calculated from an image of a sample stained with a molecularly targeted dye that visualizes a predetermined target molecule, and a degree of abnormality in the cell is determined. Patent Literature 1 discloses determining whether regions of a recognized cell or cell agglomerate are each normal or abnormal. Further, Patent Literature 2 indicates: that it is determined whether cells are isolated scattered single cells (isolated scattered cells) or a cell agglomerate, which is an agglomerate of a plurality of cells; that, on the basis of at least one selected from the group consisting of (i) a shape feature parameter of a figure of a cell represented in a VS image of an entire sample and (ii) a video feature parameter (e.g., a luminance value) of the figure of the cell, a determination table is used to determine whether the isolated scattered cells are normal or abnormal; and that a process for determining whether the cell agglomerate is abnormal is carried out by changing a table used for determination.

Citation List

[Patent Literature]

[Patent Literature 1]
Japanese Patent Application Publication, Tokukai, No. 2011-179924
[Patent Literature 2]
Japanese Patent Application Publication, Tokukai, No. 2009-175334

Summary of Invention

Technical Problem

However, according to the technique disclosed in Patent Literature 1, counterstaining for staining of a cell nucleus is carried out with respect to a sample, and it is evaluated whether a desired antigen is expressed around the cell nucleus stained by the counterstaining. The technique disclosed in Patent Literature 1 is limited to observation of whether an antigen is expressed. Further, the technique disclosed in Patent Literature 2 is limited to a method for analyzing a virtual slide image of a sample, the virtual slide image being constituted by combining, with each other, a plurality of microscopic images that have been acquired by photographing carried out every time an objective lens and the sample are moved relative to each other in a direction orthogonal to an optical axis.

An example aspect of the present invention has been made in view of the above problem, and an example object thereof is to provide a technique that makes it possible to classify a specimen cell as benign or malignant with higher accuracy without any limitation to a specific purpose or method.

Solution to Problem

A cell classification apparatus in accordance with an example aspect of the present invention includes: an acquisition means for acquiring an image that includes at least one specimen cell as a subject; a determination means for determining whether each of the at least one specimen cell is an individual cell or a massive cell; and a classification means for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

A cell classification method in accordance with an example aspect of the present invention includes: (a) acquiring an image that includes at least one specimen cell as a subject; (b) determining whether each of the at least one specimen cell is an individual cell or a massive cell; and (c) carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant, (a), (b), and (c) each being carried out by at least one processor.

A cell classification program in accordance with an example aspect of the present invention causes a computer to carry out: a process for acquiring an image that includes at least one specimen cell as a subject; a process for determining whether each of the at least one specimen cell is an individual cell or a massive cell; and a process for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

Advantageous Effects of Invention

An example aspect of the present invention makes it possible to subject a specimen cell to classification as benign or malignant without any limitation to a specific method.

Brief Description of Drawings

Fig. 1 is a block diagram illustrating a configuration of a cell classification apparatus 1 in accordance with a first example embodiment of the present invention.
Fig. 2 is a view schematically illustrating an example method for detecting a cell from a captured image.
Fig. 3 is a flowchart showing a flow of a cell classification method S1 in accordance with the first example embodiment.
Fig. 4 is a block diagram illustrating a configuration of a cell classification apparatus 1A in accordance with a second example embodiment.
Fig. 5 illustrates example training data used to construct a trained determination model.
Fig. 6 is a block diagram illustrating a configuration of a cell classification apparatus 1B in accordance with a third example embodiment.
Fig. 7 is a view schematically illustrating an example in which training images showing one or more benign individual cells and one or more malignant individual cells are used to construct a trained individual cell classification model.
Fig. 8 is a view schematically illustrating an example in which training images showing one or more benign massive cells and one or more malignant massive cells are used to construct a trained massive cell classification model.
Fig. 9 is a view schematically illustrating an example procedure for generating input data for carrying out classification as benign or malignant with use of both a trained individual cell classification model and a trained massive cell classification model.
Fig. 10 is a configuration diagram for realizing an information processing apparatus by software.

Example Embodiments

[First example embodiment]

The following description will discuss a first example embodiment of the present invention in detail with reference to the drawings. The present example embodiment is a basic form of the example embodiments described later.

(Configuration of cell classification apparatus 1)

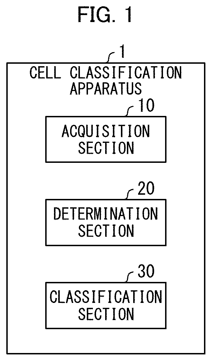

The following description will discuss, with reference to Fig. 1, a configuration of a cell classification apparatus 1 in accordance with the present example embodiment. Fig. 1 is a block diagram illustrating the configuration of the cell classification apparatus 1 in accordance with the first example embodiment of the present invention. The cell classification apparatus 1 is an apparatus for classifying a specimen cell, which is included in a specimen, as a benign cell or a malignant cell (i.e., carrying out classification as benign or malignant) for pathological diagnosis. The pathological diagnosis indicates that a specimen collected from a human body is observed with use of a microscope to carry out a diagnosis of the presence or absence of a lesion and/or a type of legion. The cell classification apparatus 1 is, for example, an apparatus for carrying out rapid on-site cytologic evaluation during specimen collection from a respiratory system organ by puncture with use of an endoscope.

The cell classification apparatus 1 includes an acquisition section 10, a determination section 20, and a classification section 30 as illustrated in Fig. 1. The acquisition section 10 acquires an image that includes a specimen cell as a subject. In the present example embodiment, a specimen cell is a cell included in a specimen, and the specimen ordinarily includes a plurality of specimen cells. The specimen may be, as an example, a specimen of an organ tissue that has been collected by puncture. Puncture is a specimen collection method in which a doctor inserts a collection needle into an organ tissue to collect a cell of the organ tissue. Puncture may be carried out while a doctor is using a respiratory endoscope. This makes it possible to, for example, collect a tissue that is suspected of having a lung tumor. A collected organ tissue is, for example, sampled by a medical technician, and a digital camera-equipped microscope is used to capture an image (a microscope camera image) including a specimen cell (hereinafter also simply referred to as "cell"). The medical technician records the captured image in, for example, a memory (not illustrated) of the cell classification apparatus 1. The acquisition section 10 acquires, as digital data, the image recorded in the memory. The acquisition section 10 is an aspect of the "acquisition means" recited in the claims.

The medical technician uses a collected specimen to prepare at least one slide sample, stains and air-dries a cell, and then uses a microscope to capture one or more images. These operations are commonly carried out, and it is possible to determine at this point whether sufficient cells have been collected. Unless sufficient cells have been collected, a specimen can be collected by carrying out puncture again.

The determination section 20 determines whether each of at least one specimen cell is an individual cell or a massive cell. The individual cell is a cell that exists as a single independent cell. The massive cell is a cell in which a plurality of cells densely gather. The massive cell also includes a cell obtained by photographing a plurality of individual cells overlapping each other in a depth direction. The determination section 20 is an aspect of the "determination means" recited in the claims.

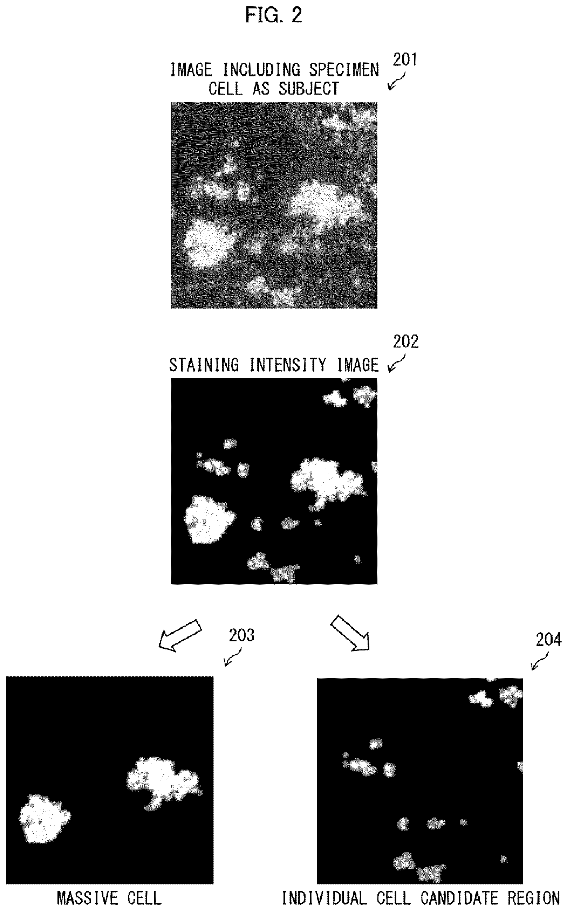

In order to determine whether a specimen cell is the individual cell or the massive cell, a cell is detected first. A method for detecting a cell will be described with reference to the drawings. Fig. 2 is a view schematically illustrating an example method for detecting a cell from an image 201 that includes a specimen cell as a subject. First, the determination section 20 generates a staining intensity image 202 from the image 201 of Fig. 2 by regression analysis. Specifically, the determination section 20 sets a brightness of a non-stained background region (including a less-stained region such as a red blood cell) to 0, and generates a black-and-white image 202 in which a stained region is assigned to a brightness of 1 to 255 gray levels for each pixel in accordance with a staining intensity (reference document: US2022/0028068 A1, applicant: NEC Laboratories America). The image 202 is a staining intensity image.

With reference to at least one selected from the group consisting of a size and a circularity of the at least one specimen cell, the determination section 20 may determine whether the at least one specimen cell is the individual cell or the massive cell. For example, the determination section 20 determines whether an area of a continuous stained region is not less than a predetermined threshold in the staining intensity image. The determination section 20 determines (detects), as the massive cell, a region in which the area of the continuous stained region is not less than the predetermined threshold. The image 203 of Fig. 2 is an image in which only massive cells are left.

In contrast, the determination section 20 determines, as a candidate region for the individual cell, a region in which the area of the continuous stained region is smaller than the predetermined threshold. The determination section 20 may use the region as a candidate to finally detect the individual cell from among candidate regions. The image 204 of Fig. 2 is an image in which only the candidate regions for the individual cell are left.

The reason for determining whether a cell is the individual cell or the massive cell is that the massive cell is characteristic in that a criterion for determination thereof differs from that for the individual cell as compared with the individual cell. Thus, in a case where the cell classification apparatus 1 is used to carry out ROSE, it is preferable to (i) detect a cell, (ii) determine whether the detected cell is the individual cell or the massive cell, and (iii) determine, in accordance with whether the cell is the individual cell or the massive cell, whether the cell is benign or malignant.

The classification section 30 carries out at least one selected from the group consisting of (i) a process for subjecting a specimen cell that has been determined to be the individual cell to classification as benign or malignant and (ii) a process for subjecting a specimen cell that has been determined to be the massive cell to classification as benign or malignant.

For example, the classification section 30 may subject only a cell that has been determined to be the individual cell to classification as benign or malignant. A machine learning model that carries out classification as benign or malignant learns on the basis of a cell that, on an individual cell basis, can be visually determined to be benign or malignant, i.e., can be labeled as benign or malignant. Thus, classification of the individual cell as benign or malignant is more accurate than classification of the massive cell as benign or malignant. Thus, application of classification as benign or malignant only to the cell that has been determined to be the individual cell achieves higher classification accuracy as compared with a case where the individual cell and the massive cell are collectively classified as benign or malignant. Further, since it is not necessary to subject the massive cell to classification as benign or malignant, a process for classification as benign or malignant can be carried out in a shorter time as compared with a case where the massive cell is also subjected to classification as benign or malignant.

The classification section 30 may alternatively subject only a cell that has been determined to be the massive cell to classification as benign or malignant. Alternatively, the classification section 30 may subject both the specimen cell that has been determined to be the individual cell and the specimen cell that has been determined to be the massive cell to classification as benign or malignant. Note that "classification as benign or malignant" is not limited to classification as benign or malignant and may be calculation of, for example, a probability of being malignant.

The classification section 30 subjects at least one individual cell and/or at least one massive cell to classification as benign or malignant. The classification section 30 may further aggregate results of classification as benign or malignant. For example, the classification section 30 may aggregate data such as the number of cells that have been determined to be benign and the number of cells that have been determined to be malignant. The classification section 30 may refer to the aggregated results to determine whether a specimen is benign or malignant. The specimen can be determined by, for example, combining results of aggregation of a plurality of cells subjected to classification as benign or malignant. The classification section 30 is an aspect of the "classification means" recited in the claims.

In Fig. 1, the acquisition section 10, the determination section 20, and the classification section 30 are illustrated as being physically collectively disposed in one housing, but do not necessarily need to be thus disposed. Specifically, these sections may be disposed so as to be dispersed in a plurality of housings that are physically spaced apart, and the sections may be connected to each other in a wired or wireless manner so that information communication can be carried out. Further, at least some of these sections may be disposed on a cloud. This also applies to the following example embodiments.

As described above, a configuration is employed such that the cell classification apparatus 1 in accordance with the present example embodiment includes: the acquisition section 10 which acquires an image that includes at least one specimen cell as a subject; the determination section 20 which determines whether each of the at least one specimen cell is an individual cell or a massive cell; and the classification section 30 which carries out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant. Thus, the cell classification apparatus 1 in accordance with the present example embodiment makes it possible to obtain an effect of making it possible to classify a specimen cell as benign or malignant with higher accuracy without any limitation to a specific purpose or method. Further, as compared with a case where the individual cell and the massive cell are collectively subjected to classification as benign or malignant, a case where only a cell that has been determined to be the individual cell is subjected to classification as benign or malignant brings about an effect of achieving higher classification accuracy.

(Flow of information processing method)

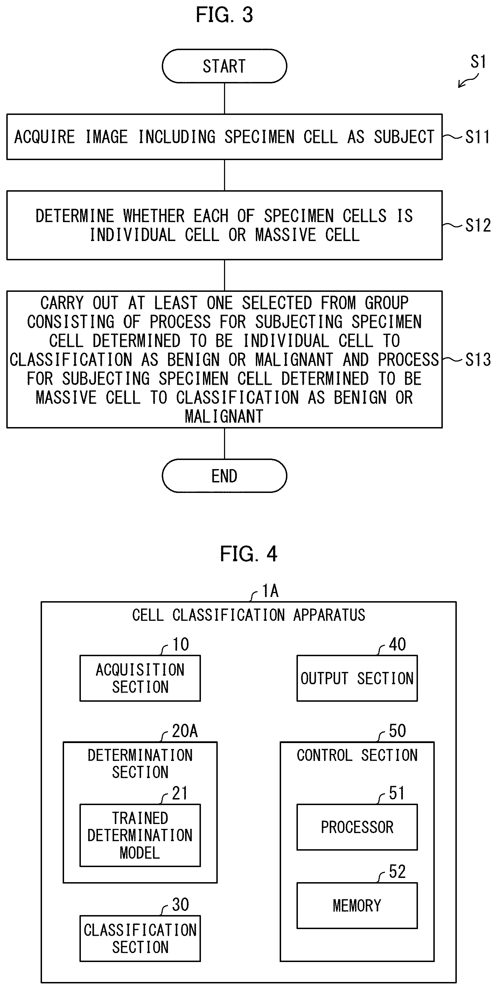

The following description will discuss, with reference to Fig. 3, a flow of a cell classification method S1 in accordance with the present example embodiment. Fig. 3 is a flowchart showing the flow of the cell classification method S1. The cell classification method S1 includes steps S11 to S13 as illustrated in Fig. 3.

Step S11 is a step in which at least one processor (for example, the acquisition section 10) acquires an image that includes at least one specimen cell as a subject. The specimen cell and the image are as described in the configuration of the cell classification apparatus 1.

Step S12 is a step in which at least one processor (for example, the determination section 20) determines whether each of the at least one specimen cell is an individual cell or a massive cell. The individual cell, the massive cell, and a determination method are as described in the configuration of the cell classification apparatus 1.

Step S13 is a step in which at least one processor (for example, the classification section 30) carries out at least one selected from the group consisting of (i) subjecting the at least one specimen cell that has been determined to be the individual cell to classification as benign or malignant and (ii) subjecting the at least one specimen cell that has been determined to be the massive cell to classification as benign or malignant. Classification as benign or malignant is as described in the configuration of the cell classification apparatus 1.

As described above, a configuration is employed such that the cell classification method S1 in accordance with the present example embodiment includes: (a) acquiring an image that includes at least one specimen cell as a subject; (b) determining whether each of the at least one specimen cell is an individual cell or a massive cell; and (c) carrying out at least one selected from the group consisting of (i) subjecting the at least one specimen cell that has been determined to be the individual cell to classification as benign or malignant and (ii) subjecting the at least one specimen cell that has been determined to be the massive cell to classification as benign or malignant. Thus, the cell classification method S1 in accordance with the present example embodiment makes it possible to obtain an effect of making it possible to classify a specimen cell as benign or malignant with higher accuracy without any limitation to a specific purpose or method.

[Second example embodiment]

The following description will discuss a second example embodiment of the present invention in detail with reference to the drawings. Note that sections having functions identical to those of the respective sections described in the first example embodiment are given respective identical reference numerals, and a description thereof is omitted as appropriate.

(Configuration of cell classification apparatus 1A)

Fig. 4 is a block diagram illustrating a configuration of a cell classification apparatus 1A in accordance with the second example embodiment of the present invention. The cell classification apparatus 1A includes an acquisition section 10, a determination section 20A, a classification section 30, an output section 40, and a control section 50 as illustrated in Fig. 4.

The acquisition section 10 has a function similar to that of the acquisition section 10 described in the first example embodiment. In the present example embodiment, the acquisition section 10 acquires an image of an organ tissue which image is recorded in advance in a memory 52 of the control section 50.

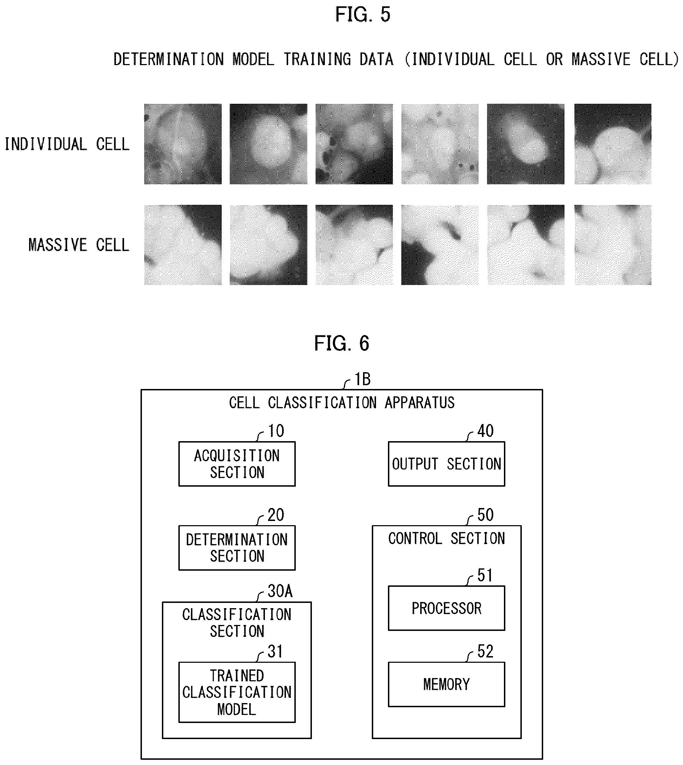

The determination section 20A includes a trained determination model 21. The trained determination model 21 may be a determination model that has been trained with use of a training image showing an individual cell and a training image showing a massive cell. Fig. 5 illustrates example training data used to construct the trained determination model 21. As illustrated in Fig. 5, the trained determination model 21 has been trained with use of a plurality of images of the individual cell (training data) and a plurality of images of the massive cell (training data), and can output whether a cell in an image is the individual cell or the massive cell. The determination section 20A inputs an image to the trained determination model 21 and refers to output of the trained determination model 21 to determine whether each of cells in the image is the individual cell or the massive cell. The trained determination model 21 can be, for example, a convolution neural network (CNN). Alternatively, a non-neural network type model such as a random forest or a support vector machine may be used.

With another reference to Fig. 4, after detecting each of at least one specimen cell as an individual cell candidate or a massive cell candidate, the determination section 20A may use the trained determination model 21 to determine the at least one specimen cell thus detected. For example, the determination section 20A may use the method described in the first example embodiment to detect a candidate region for the individual cell and a candidate for the massive cell. The determination section 20A may detect an individual cell candidate by subjecting the candidate region for the individual cell to, for example, the following process. Specifically, the determination section 20A searches for a brightness local maximum value in a predetermined range, for example, a circular region having a diameter of not less than n (mm) and less than m (mm). A point of this brightness local maximum value (pixel) is regarded as a cell center. Subsequently, the determination section 20A uses Hough transformation to extract a region that has a predetermined brightness from the cell center and that has a circularity which is not less than a threshold. The determination section 20A detects the extracted region as the individual cell candidate. As described above, a plurality of individual cell candidates and a plurality of massive cell candidates are ordinarily detected from a single specimen. The determination section 20A uses the trained determination model 21 to finally determine whether each of the plurality of individual cell candidates detected as described above and the plurality of massive cell candidates detected as described above is the individual cell or the massive cell.

As in the case of the classification section 30 described in the first example embodiment, the classification section 30 carries out at least one selected from the group consisting of (i) a process for subjecting a cell that has been determined to be the individual cell to classification as benign or malignant and (ii) a process for subjecting a cell that has been determined to be the massive cell to classification as benign or malignant. Further, the classification section 30 may transmit, to the output section, a result of classification as benign or malignant.

The output section 40 may externally output the result of classification as benign or malignant by the classification section 30. The output result of classification as benign or malignant may be displayed on, for example, a display apparatus (not illustrated).

The control section 50 collectively controls the cell classification apparatus 1A as a whole. The control section 50 includes at least one processor and a memory 52. For example, a processor 51 can be constituted by using at least one general-purpose processor such as a micro processing unit (MPU) and/or a central processing unit (CPU). The memory 52 may include a plurality of types of memories such as a read only memory (ROM) and a random access memory (RAM). For example, the processor 51 carries out functions as the acquisition section 10, the determination section 20A, the classification section 30, and the output section 40 by loading, into the RAM, various control programs stored in the ROM of the memory 52, and executing the control programs. Further, the processor 51 may include a processor that is constituted by, for example, an application specific integrated circuit (ASIC), a field programmable gate array (FPGA), or a programmable logic device (PLD).

(Effect of cell classification apparatus 1A)

As described above, a configuration is employed such that in the cell classification apparatus 1A in accordance with the present example embodiment, the determination section 20A uses the trained determination model 21 which has been trained with use of a training image showing an individual cell and a training image showing a massive cell to determine whether each of cells is the individual cell or the massive cell. Thus, the cell classification apparatus 1A in accordance with the present example embodiment makes it possible to bring about, in addition to the effect brought about by the cell classification apparatus 1 in accordance with the first example embodiment, an effect of making it possible to efficiently determine the individual cell, and thus making it possible to efficiently subject the individual cell to classification as benign or malignant.

Further, in a cell classification method, the trained determination model 21 which has been trained with use of a training image showing an individual cell and a training image showing a massive cell may be used to determine whether each of specimen cells is the individual cell or the massive cell. This makes it possible to obtain an effect similar to the foregoing effect of the cell classification apparatus 1A.

[Third example embodiment]

The following description will discuss a third example embodiment of the present invention in detail with reference to the drawings. Note that sections having functions identical to those of the respective sections described in the first example embodiment are given respective identical reference numerals, and a description thereof is not repeated.

(Configuration of cell classification apparatus 1B)

Fig. 6 is a block diagram illustrating a configuration of a cell classification apparatus 1B in accordance with the third example embodiment of the present invention. The cell classification apparatus 1B includes an acquisition section 10, a determination section 20, a classification section 30A, an output section 40, and a control section 50 as illustrated in Fig. 6. Since the acquisition section 10, the output section 40, and the control section 50 have functions similar to those of the acquisition section 10, the output section 40, and the control section 50, which have been described in the second example embodiment, a description thereof is omitted. Note that the cell classification apparatus 1B may include, instead of the determination section 20, the determination section 20A described in the second example embodiment.

In the present third example embodiment, the classification section 30A includes a trained classification model 31. The trained classification model 31 may be a classification model that has been trained with use of at least one selected from the group consisting of (i) training images showing one or more benign individual cells and one or more malignant individual cells and (ii) training images showing one or more benign massive cells and one or more malignant massive cells. The trained classification model 31 can be, for example, a convolution neural network (CNN). Alternatively, a non-neural network type model such as a random forest or a support vector machine may be used. As in the case of the classification section 30 described in the first example embodiment, the classification section 30A uses the trained classification model 31 to carry out at least one selected from the group consisting of (i) a process for subjecting a cell that has been determined to be an individual cell to classification as benign or malignant and (ii) a process for subjecting a cell that has been determined to be a massive cell to classification as benign or malignant. That is, the classification section 30A inputs, into the trained classification model 31, an image of a cell that is desired to be classified, and refers to output of the trained classification model 31 to subject the cell to classification as benign or malignant.

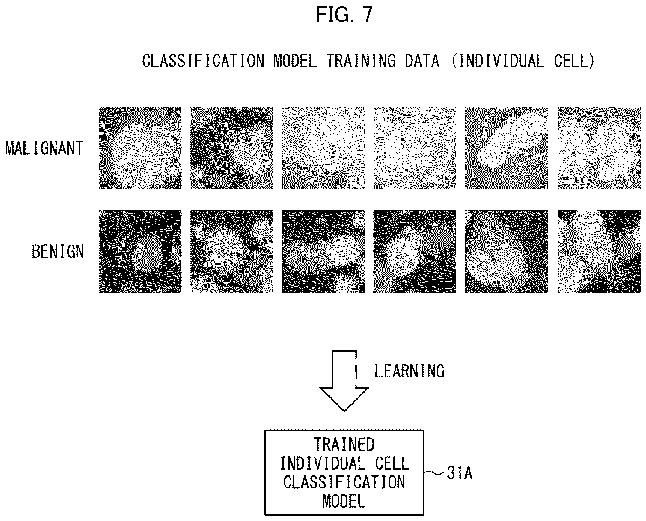

The trained classification model 31 may be a trained individual cell classification model that has been trained with use of training images showing one or more benign individual cells and one or more malignant individual cells. In this case, the classification section 30A acquires, from the determination section 20, only a cell that has been determined by the determination section 20 to be the individual cell, and uses the trained individual cell classification model to carry out classification as benign or malignant. Fig. 7 is a view schematically illustrating an example in which training images showing one or more benign individual cells and one or more malignant individual cells are used to construct the trained individual cell classification model. As illustrated in Fig. 7, a user inputs, into an individual cell classification model, an image showing a benign individual cell, to cause the individual cell classification model to learn a characteristic of the benign individual cell, and inputs, into the individual cell classification model, an image showing a malignant individual cell, to cause the individual cell classification model to learn a characteristic of the malignant individual cell. In this way, the trained individual cell classification model 31 can be constructed.

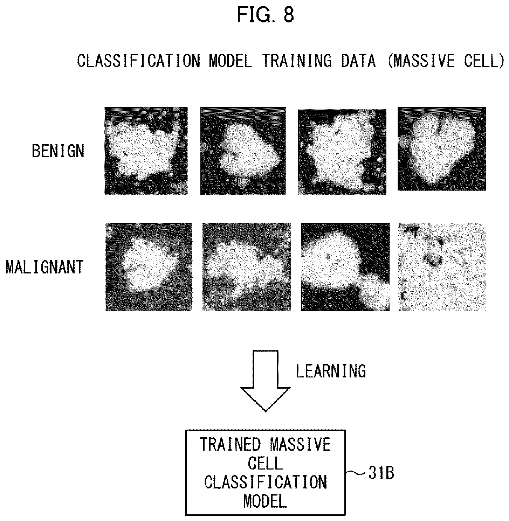

Further, the trained classification model 31 may be configured to include the following two trained classification models (not illustrated): a trained individual cell classification model 31A that has been trained as described above; and a trained massive cell classification model 31B that has been trained with use of training images showing one or more benign massive cells and one or more malignant massive cells, as illustrated in Fig. 8. As illustrated in Fig. 8, the user inputs, into a massive cell classification model, an image showing a benign massive cell, to cause the massive cell classification model to learn a characteristic of the benign massive cell, and inputs, into the massive cell classification model, an image showing a malignant massive cell, to cause the massive cell classification model to learn a characteristic of the malignant massive cell. In this way, the trained massive cell classification model 31B can be constructed.

Also in a case where the trained classification model 31 is configured to include two models, i.e., the trained individual cell classification model 31A and the trained massive cell classification model 31B, the classification section 30A may use the trained individual cell classification model 31A to subject only the cell that has been determined to be the individual cell to classification as benign or malignant. The classification section 30A may alternatively use the trained massive cell classification model 31B to subject only the cell that has been determined to be the massive cell to classification as benign or malignant.

The classification section 30A may use both the trained individual cell classification model 31A and the trained massive cell classification model 31B to carry out classification as benign or malignant. In this case, the classification section 30A refers to both an output result from the trained individual cell classification model 31A and an output result from the trained massive cell classification model 31B to subject a specimen cell to classification as benign or malignant. For example, the classification section 30A may carry out classification as benign or malignant with reference to data on the individual cell that has been classified as malignant and data on the massive cell that has been classified as malignant. For example, the classification section 30A may calculate a classification result with use of the following equation (1):

$$ p = w1 \left( \frac{\Sigma p1}{n} \right) + w2 \left( \frac{\Sigma p2}{m} \right) \quad \cdots (1) $$

where

p is a probability of a specimen being malignant,
w1 is a weight of output of the trained individual cell classification model 31A,
w2 is a weight of output of the trained massive cell classification model 31B,
$\Sigma p1$ is a sum of probabilities of each of the individual cells being malignant,
$\Sigma p2$ is a sum of probabilities of each of the massive cells being malignant,
n is the number of individual cells, and
m is the number of massive cells.

In some cases, even a massive cell includes information for determining whether a specimen is benign or malignant. Thus, subjecting the massive cell to classification as benign or malignant makes it possible to also obtain such information. However, it is commonly known that determination of whether a massive cell is benign or malignant is more difficult, i.e., has lower classification accuracy than determination of whether an individual cell is benign or malignant. Thus, w2 may be set to be smaller than w1.

The classification section 30A may also transmit, to the output section 40, at least one selected from the group consisting of, for example, (i) data on an individual cell that has been classified as malignant, (ii) data on a massive cell that has been classified as malignant, and (iii) a result of classification of a specimen as benign or malignant.

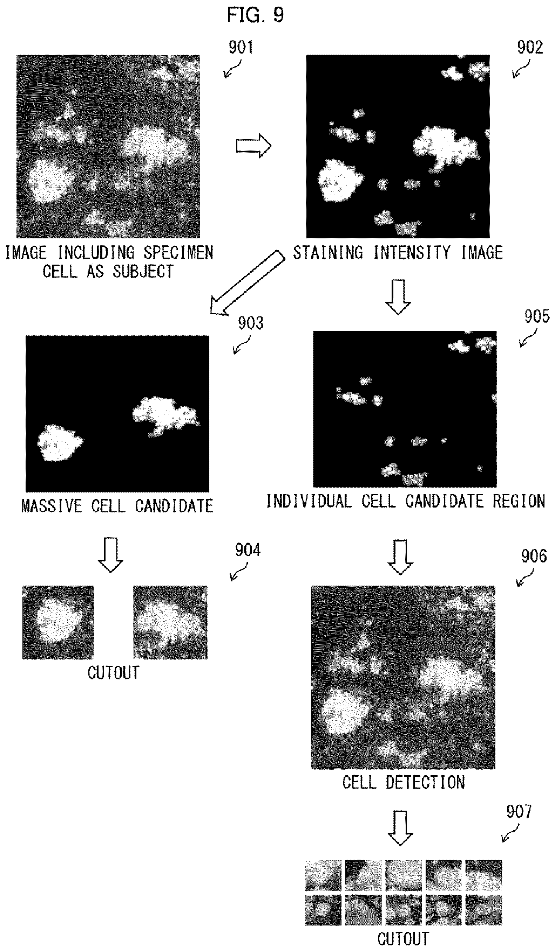

Fig. 9 is a view schematically illustrating an example procedure for generating input data for carrying out classification as benign or malignant with use of both the trained individual cell classification model 31A and the trained massive cell classification model 31B.

First, the acquisition section 10 acquires an image 901 that includes a specimen cell as a subject as illustrated in Fig. 9. Next, the determination section 20 generates a staining intensity image 902 from the image 901. Subsequently, the determination section 20 generates, from the staining intensity image 902, a massive cell candidate image 903 and an individual cell candidate region image 905. Further, the determination section 20 detects a massive cell from the massive cell candidate image 903 and detects an individual cell candidate from the individual cell candidate region image 905. An example of these methods is as described in the first example embodiment. Next, the determination section 20 may generate an image 904 that has been cut out, from an image of a cell which has been determined to be an individual cell, so as to have a predetermined size and include the individual cell. Further, the determination section 20 may generate an image that has been obtained by cutting out, from an image 906 of a cell which has been determined (detected) to be a massive cell, an image 907 having any size (any range from a massive center, a bounding rectangle, or the like) and including the cell, and normalizing the size of the image 907 to a predetermined size. This is because the size of an image to be input into the trained classification model needs to be standardized to a predetermined size. The determination section 20 transmits, to the classification section 30A, images thus generated. The classification section 30A inputs these acquired images to the trained individual cell classification model 31A or the trained massive cell classification model 31B in accordance with types of the images and refers to output of the trained individual cell classification model 31A or the trained massive cell classification model 31B to carry out classification as benign or malignant.

(Effect of cell classification apparatus 1B)

As described above, a configuration is employed such that in the cell classification apparatus 1B in accordance with the present example embodiment, the classification section 30A includes a classification model that has been trained with use of at least one selected from the group consisting of (i) training images showing one or more benign individual cells and one or more malignant individual cells and (ii) training images showing one or more benign massive cells and one or more malignant massive cells. Thus, according to the cell classification apparatus 1B in accordance with the present example embodiment, particularly in a case where both the trained individual cell classification model 31A and the trained massive cell classification model 31B are used to carry out classification as benign or malignant, it is possible to obtain, in addition to the effect brought about by the cell classification apparatus 1 in accordance with the first example embodiment, an effect of making it possible to also use information included in a massive cell to carry out classification as benign or malignant, so that a specimen can be classified as benign or malignant with higher accuracy.

Further, in a cell classification method, classification as benign or malignant may be such that classification as benign or malignant is carried out with use of a classification model that has been trained with use of at least one selected from the group consisting of (i) training images showing one or more benign individual cells and one or more malignant individual cells and (ii) training images showing one or more benign massive cells and one or more malignant massive cells. In particular, a case where both the trained individual cell classification model 31A and the trained massive cell classification model 31B are used to carry out classification as benign or malignant brings about an effect similar to the foregoing effect of the cell classification apparatus 1B.

[Software implementation example]

Some or all of the functions of the cell classification apparatuses 1, 1A, and 1B may be realized by hardware such as an integrated circuit (IC chip) or may be alternatively realized by software.

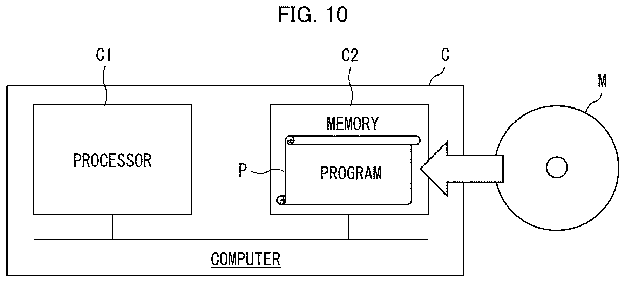

In the latter case, the cell classification apparatuses 1, 1A, and 1B are realized by, for example, a computer that executes instructions of a program that is software implementing the functions. Fig. 10 illustrates an example of such a computer (hereinafter referred to as "computer C"). The computer C includes at least one processor C1 and at least one memory C2. The memory C2 stores a program P for causing the computer C to operate as the cell classification apparatuses 1, 1A, and 1B. In the computer C, the processor C1 retrieves the program P from the memory C2 and executes the program P, so that the functions of the cell classification apparatuses 1, 1A, and 1B are implemented.

The processor C1 can be, for example, a central processing unit (CPU), a graphic processing unit (GPU), a digital signal processor (DSP), a micro processing unit (MPU), a floating point number processing unit (FPU), a physics processing unit (PPU), a tensor processing unit (TPU), a quantum processor, a microcontroller, or a combination of these. The memory C2 can be, for example, a flash memory, a hard disk drive (HDD), a solid state drive (SSD), or a combination thereof.

Note that the computer C may further include a random access memory (RAM) in which the program P is loaded in a case where the program P is executed and in which various kinds of data are temporarily stored. The computer C may further include a communication interface via which the computer C transmits and receives data to and from another apparatus. The computer C may further include an input/output interface via which the computer C is connected to an input/output apparatus(es) such as a keyboard, a mouse, a display, and/or a printer.

The program P can be recorded in a non-transitory tangible recording medium M which is readable by the computer C. The recording medium M can be, for example, a tape, a disk, a card, a semiconductor memory, or a programmable logic circuit. The computer C can acquire the program P via the recording medium M. The program P can be transmitted via a transmission medium. The transmission medium can be, for example, a communications network or a broadcast wave. The computer C can acquire the program P also via the transmission medium.

[Additional remark 1]

The present invention is not limited to the foregoing example embodiments, but may be altered in various ways by a skilled person within the scope of the claims. For example, the present invention also encompasses, in its technical scope, any example embodiment derived by appropriately combining technical means disclosed in the foregoing example embodiments.

[Additional remark 2]

The whole or part of the foregoing example embodiments can also be described as below. Note, however, that the present invention is not limited to the following supplementary notes.

(Supplementary note 1)

A cell classification apparatus including: an acquisition means for acquiring an image that includes at least one specimen cell as a subject; a determination means for determining whether each of the at least one specimen cell is an individual cell or a massive cell; and a classification means for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

The above configuration makes it possible to subject a specimen cell to classification as benign or malignant without any limitation to a specific method.

(Supplementary note 2)

The cell classification apparatus according to Supplementary note 1, wherein the classification means subjects only the at least one specimen cell that has been determined to be the individual cell to classification as benign or malignant.

The above configuration makes it possible to classify a specimen as benign or malignant with higher

**EP 4 600 643 A1**

accuracy by carrying out classification as benign or malignant while excluding a massive cell.

(Supplementary note 3)

The cell classification apparatus according to Supplementary note 1, wherein the classification means subjects both the at least one specimen cell that has been determined to be the individual cell and the at least one specimen cell that has been determined to be the massive cell to classification as benign or malignant.
The above configuration makes it possible to classify a specimen as benign or malignant with higher accuracy by carrying out classification as benign or malignant also with respect to an individual cell that seems to be a massive cell but can be subjected to classification as benign or malignant.

(Supplementary note 4)

The cell classification apparatus according to Supplementary note 3, wherein the classification means carries out classification as benign or malignant with reference to data on the individual cell that has been classified as malignant and data on the massive cell that has been classified as malignant.
The above configuration makes it possible to also use information included in the massive cell to carry out classification as benign or malignant, so that a specimen can be classified as benign or malignant with higher accuracy.

(Supplementary note 5)

The cell classification apparatus according to any one of Supplementary notes 1 to 4, wherein with reference to at least one selected from the group consisting of a size and a circularity of the at least one specimen cell, the determination means determines whether the at least one specimen cell is the individual cell or the massive cell.
The above configuration makes it possible to effectively determine whether the at least one specimen cell is the individual cell or the massive cell.

(Supplementary note 6)

The cell classification apparatus according to any one of Supplementary notes 1 to 4, wherein the determination means includes a determination model that has been trained with use of a training image showing the individual cell and a training image showing the massive cell.
The above configuration makes it possible to determine the individual cell and the massive cell with use of the trained determination model, so that a specimen can be classified as benign or malignant with higher accuracy.

(Supplementary note 7)

The cell classification apparatus according to Supplementary note 6, wherein after detecting each of the at least one specimen cell as an individual cell candidate or a massive cell candidate, the determination means uses the trained determination model to determine the at least one specimen cell thus detected.
The above configuration makes it possible to also use information included in the massive cell to carry out classification as benign or malignant, so that a specimen can be classified as benign or malignant with higher accuracy.

(Supplementary note 8)

The cell classification apparatus according to any one of Supplementary notes 1 to 7, wherein the classification means includes a classification model that has been trained with use of at least one selected from the group consisting of (i) training images showing one or more benign individual cells and one or more malignant individual cells and (ii) training images showing one or more benign massive cells and one or more malignant massive cells.
The above configuration makes it possible to use the trained classification model to classify a benign cell and a malignant cell, so that a specimen can be classified as benign or malignant with higher accuracy.

(Supplementary note 9)

The cell classification apparatus according to Supplementary note 8, wherein the determination means generates (i) an image which has been cut out, from an image of the at least one specimen cell that has been determined to be the individual cell, so as to have a predetermined size and include the individual cell or (ii) an image which has been obtained by cutting out, from a first image of the at least one specimen cell that has been determined to be the massive cell, a second image having any size and including the massive cell, and normalizing the size of the second image to the predetermined size.
The above configuration makes it possible to generate an image that can be input into the trained classification model.

(Supplementary note 10)

The cell classification apparatus according to any one of Supplementary notes 1 to 9, wherein the classification means further includes an output means for outputting a result of classification as benign or malignant.
The above configuration makes it possible to output a classification result to a display apparatus.

(Supplementary note 11)

A cell classification method including: (a) acquiring an image that includes at least one specimen cell as a subject; (b) determining whether each of the at least one specimen cell is an individual cell or a massive cell; and (c) carrying out at least one selected from the group consisting of (i) subjecting the at least one specimen cell that has been determined to be the individual cell to classification as benign or malignant and (ii) subjecting the at least one specimen cell that has been determined to be the massive cell to classification as benign or malignant, (a), (b), and (c) each being carried out by at least one processor.

The above configuration makes it possible to obtain an effect similar to the effect of Supplementary note 1.

(Supplementary note 12)

The cell classification method according to Supplementary note 11, wherein in (c), only the at least one specimen cell that has been determined to be the individual cell is subjected to classification as benign or malignant.

The above configuration makes it possible to obtain an effect similar to the effect of Supplementary note 2.

(Supplementary note 13)

The cell classification method according to Supplementary note 11, wherein in (c), both the at least one specimen cell that has been determined to be the individual cell and the at least one specimen cell that has been determined to be the massive cell are subjected to classification as benign or malignant.

The above configuration makes it possible to obtain an effect similar to the effect of Supplementary note 3.

(Supplementary note 14)

The cell classification method according to Supplementary note 13, wherein in (c), classification as benign or malignant is carried out with reference to data on the individual cell that has been classified as malignant and data on the massive cell that has been classified as malignant.

The above configuration makes it possible to obtain an effect similar to the effect of Supplementary note 4.

(Supplementary note 15)

The cell classification method according to any one of Supplementary notes 11 to 14, wherein in (b), with reference to at least one selected from the group consisting of a size and a circularity of the at least one specimen cell, it is determined whether the at least one specimen cell is the individual cell or the massive cell.

The above configuration makes it possible to obtain an effect similar to the effect of Supplementary note 5.

(Supplementary note 16)

The cell classification method according to any one of Supplementary notes 11 to 14, wherein in (b), determination is carried out with use of a determination model that has been trained with use of a training image showing the individual cell and a training image showing the massive cell.

The above configuration makes it possible to obtain an effect similar to the effect of Supplementary note 6.

(Supplementary note 17)

The cell classification method according to Supplementary note 16, wherein in (b), after each of the at least one specimen cell is detected as an individual cell candidate or a massive cell candidate, the trained determination model is used to determine the at least one specimen cell thus detected.

The above configuration makes it possible to obtain an effect similar to the effect of Supplementary note 7.

(Supplementary note 18)

The cell classification method according to any one of Supplementary notes 11 to 17, wherein in (c), classification as benign or malignant is carried out with use of a classification model that has been trained with use of at least one selected from the group consisting of (i) training images showing one or more benign individual cells and one or more malignant individual cells and (ii) training images showing one or more benign massive cells and one or more malignant massive cells.

The above configuration makes it possible to obtain an effect similar to the effect of Supplementary note 8.

(Supplementary note 19)

The cell classification method according to Supplementary note 18, wherein in (b), (i) an image which has been cut out, from an image of the at least one specimen cell that has been determined to be the individual cell, so as to have a predetermined size and include the individual cell or (ii) an image which has been obtained by cutting out, from a first image of the at least one specimen cell that has been determined to be the massive cell, a second image having any size and including the massive cell, and normalizing the size of the second image to the predetermined size is generated, and the image (i) or (ii) is used to carry out determination.

The above configuration makes it possible to obtain an effect similar to the effect of Supplementary note 9.

(Supplementary note 20)

The cell classification method according to any one of Supplementary notes 11 to 19, further including outputting a result of (c).

The above configuration makes it possible to obtain an effect similar to the effect of Supplementary note 10.

(Supplementary note 21)

A cell classification program for causing a computer to carry out: a process for acquiring an image that includes at least one specimen cell as a subject; a process for determining whether each of the at least one specimen cell is an individual cell or a massive cell; and a process for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

[Additional remark 3]

The whole or part of the foregoing example embodiments further can also be expressed as below.

A cell classification apparatus including at least one processor, the at least one processor carrying out: an acquisition process for acquiring an image that includes at least one specimen cell as a subject; a determination process for determining whether each of the at least one specimen cell is an individual cell or a massive cell; and a classification process for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

Note that the cell classification apparatus may further include a memory, which may store a program for causing the at least one processor to carry out the acquisition process, the determination process, and the classification process. The program may be stored in a non-transitory tangible computer-readable recording medium.

Reference Signs List

| | |
|---|---|
| 1, 1A, 1B | Cell classification apparatus |
| 10 | Acquisition section |
| 20, 20A | Determination section |
| 21 | Trained determination model |
| 30, 30A | Classification section |
| 31 | Trained classification model |
| 40 | Output section |
| 50 | Control section |
| 51 | Processor |
| 52 | Memory |

**Claims**

1. A cell classification apparatus comprising:

   an acquisition means for acquiring an image that includes at least one specimen cell as a subject;
   a determination means for determining whether each of the at least one specimen cell is an individual cell or a massive cell; and
   a classification means for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

2. The cell classification apparatus according to claim 1, wherein
   the classification means subjects only the at least one specimen cell that has been determined to be the individual cell to classification as benign or malignant.

3. The cell classification apparatus according to claim 1, wherein
   the classification means subjects both the at least one specimen cell that has been determined to be the individual cell and the at least one specimen cell that has been determined to be the massive cell to classification as benign or malignant.

4. The cell classification apparatus according to claim 3, wherein
   the classification means carries out classification as benign or malignant with reference to data on the individual cell that has been classified as malignant and data on the massive cell that has been classified as malignant.

5. The cell classification apparatus according to any one of claims 1 to 4, wherein
   with reference to at least one selected from the group consisting of a size and a circularity of the at least one specimen cell, the determination means determines whether the at least one specimen cell is the individual cell or the massive cell.

6. The cell classification apparatus according to any one of claims 1 to 4, wherein
   the determination means includes a determination model that has been trained with use of a training image showing the individual cell and a training image showing the massive cell.

7. The cell classification apparatus according to claim 6, wherein
   after detecting each of the at least one specimen cell as an individual cell candidate or a massive cell candidate, the determination means uses the trained determination model to determine the at least one specimen cell thus detected.

8. The cell classification apparatus according to any one of claims 1 to 7, wherein
   the classification means includes a classification model that has been trained with use of at least one selected from the group consisting of (i) training images showing one or more benign individual cells and one or more malignant individual cells and (ii) training images showing one or more benign massive cells and one or more malignant massive cells.

9. The cell classification apparatus according to claim 8, wherein
   the determination means generates (i) an image which has been cut out, from an image of the at least one specimen cell that has been determined to be the individual cell, so as to have a predetermined size and include the individual cell or (ii) an image which has been obtained by cutting out, from a first image of the at least one specimen cell that has been determined to be the massive cell, a second image having any size and including the massive cell, and normalizing the size of the second image to the predetermined size.

10. The cell classification apparatus according to any one of claims 1 to 9, wherein
    the classification means further includes an output means for outputting a result of classification as benign or malignant.

11. A cell classification method comprising:

    (a) acquiring an image that includes at least one specimen cell as a subject;
    (b) determining whether each of the at least one specimen cell is an individual cell or a massive cell; and
    (c) carrying out at least one selected from the group consisting of (i) subjecting the at least one specimen cell that has been determined to be the individual cell to classification as benign or malignant and (ii) subjecting the at least one specimen cell that has been determined to be the massive cell to classification as benign or malignant,
    (a), (b), and (c) each being carried out by at least one processor.

12. The cell classification method according to claim 11, wherein
    in (c), only the at least one specimen cell that has been determined to be the individual cell is subjected to classification as benign or malignant.

13. The cell classification method according to claim 11, wherein
    in (c), both the at least one specimen cell that has been determined to be the individual cell and the at least one specimen cell that has been determined to be the massive cell are subjected to classification as benign or malignant.

14. The cell classification method according to claim 13, wherein
    in (c), classification as benign or malignant is carried out with reference to data on the individual cell that has been classified as malignant and data on the massive cell that has been classified as malignant.

15. The cell classification method according to any one of claims 11 to 14, wherein
    in (b), with reference to at least one selected from the group consisting of a size and a circularity of the at least one specimen cell, it is determined whether the at least one specimen cell is the individual cell or the massive cell.

16. The cell classification method according to any one of claims 11 to 14, wherein
    in (b), determination is carried out with use of a determination model that has been trained with use of a training image showing the individual cell and a training image showing the massive cell.

17. The cell classification method according to claim 16, wherein
    in (b), after each of the at least one specimen cell is detected as an individual cell candidate or a massive cell candidate, the trained determination model is used to determine the at least one specimen cell thus detected.

18. The cell classification method according to any one of claims 11 to 17, wherein
    in (c), classification as benign or malignant is carried out with use of a classification model that has been trained with use of at least one selected from the group consisting of (i) training images showing one or more benign individual cells and one or more malignant individual cells and (ii) training images showing one or more benign massive cells and one or more malignant massive cells.

19. The cell classification method according to any one of claims 11 to 14, wherein
in (b), (i) an image which has been cut out, from an image of the at least one specimen cell that has been determined to be the individual cell, so as to have a predetermined size and include the individual cell or (ii) an image which has been obtained by cutting out, from a first image of the at least one specimen cell that has been determined to be the massive cell, a second image having any size and including the massive cell, and normalizing the size of the second image to the predetermined size is generated, and the image (i) or (ii) is used to carry out determination.

20. The cell classification method according to any one of claims 11 to 14, further comprising
outputting a result of (c).

21. A cell classification program for causing a computer to carry out:

> a process for acquiring an image that includes at least one specimen cell as a subject;
> a process for determining whether each of the at least one specimen cell is an individual cell or a massive cell; and
> a process for carrying out at least one selected from the group consisting of (i) a process for subjecting the at least one specimen cell that has been determined to be the individual cell to classification as benign or malignant and (ii) a process for subjecting the at least one specimen cell that has been determined to be the massive cell to classification as benign or malignant.

FIG. 1

1

```
┌─────────────────────────────┐
│    CELL CLASSIFICATION       │
│         APPARATUS            │
│                      ┌ 10    │
│    ┌──────────────────┐      │
│    │   ACQUISITION    │      │
│    │    SECTION       │      │
│    └──────────────────┘      │
│                              │
│                      ┌ 20    │
│    ┌──────────────────┐      │
│    │  DETERMINATION   │      │
│    │    SECTION       │      │
│    └──────────────────┘      │
│                              │
│                      ┌ 30    │
│    ┌──────────────────┐      │
│    │ CLASSIFICATION   │      │
│    │    SECTION       │      │
│    └──────────────────┘      │
│                              │
└─────────────────────────────┘
```

# FIG. 2

IMAGE INCLUDING SPECIMEN 201
CELL AS SUBJECT

STAINING INTENSITY IMAGE 202

203

204

MASSIVE CELL

INDIVIDUAL CELL CANDIDATE REGION

FIG. 3

```
                        START                          S1
                          │
                          ▼
  ┌──────────────────────────────────────────────┐
  │ ACQUIRE IMAGE INCLUDING SPECIMEN CELL AS SUBJECT │─S11
  └──────────────────────────────────────────────┘
                          │
                          ▼
  ┌──────────────────────────────────────────────┐
  │     DETERMINE WHETHER EACH OF SPECIMEN CELLS IS   │─S12
  │        INDIVIDUAL CELL OR MASSIVE CELL           │
  └──────────────────────────────────────────────┘
                          │
                          ▼
  ┌──────────────────────────────────────────────┐
  │    CARRY OUT AT LEAST ONE SELECTED FROM GROUP    │
  │ CONSISTING OF PROCESS FOR SUBJECTING SPECIMEN    │
  │    CELL DETERMINED TO BE INDIVIDUAL CELL TO      │
  │ CLASSIFICATION AS BENIGN OR MALIGNANT AND PROCESS│─S13
  │  FOR SUBJECTING SPECIMEN CELL DETERMINED TO BE   │
  │    MASSIVE CELL TO CLASSIFICATION AS BENIGN OR   │
  │                  MALIGNANT                       │
  └──────────────────────────────────────────────┘
                          │
                          ▼
                        END
```

FIG. 4

```
                           ┌1A
  ┌──────────────────────────────────────────────────────┐
  │            CELL CLASSIFICATION APPARATUS               │
  │                                                        │
  │   ┌10                        ┌40                       │
  │  ┌──────────────┐          ┌──────────────┐           │
  │  │ ACQUISITION  │          │OUTPUT SECTION│           │
  │  │   SECTION    │          └──────────────┘           │
  │  └──────────────┘                                      │
  │                                                        │
  │   ┌20A                       ┌50                       │
  │  ┌──────────────┐          ┌──────────────┐           │
  │  │ DETERMINATION│          │CONTROL SECTION│          │
  │  │   SECTION    │          │               │          │
  │  │     ┌21      │          │      ┌51      │          │
  │  │  ┌────────┐  │          │   ┌────────┐  │          │
  │  │  │TRAINED │  │          │   │PROCESSOR│ │          │
  │  │  │DETERMIN│  │          │   └────────┘  │          │
  │  │  │ATION   │  │          │      ┌52      │          │
  │  │  │MODEL   │  │          │   ┌────────┐  │          │
  │  │  └────────┘  │          │   │ MEMORY │  │          │
  │  └──────────────┘          │   └────────┘  │          │
  │                            └──────────────┘           │
  │   ┌30                                                  │
  │  ┌──────────────┐                                      │
  │  │CLASSIFICATION│                                      │
  │  │   SECTION    │                                      │
  │  └──────────────┘                                      │
  └──────────────────────────────────────────────────────┘
```

## FIG. 5

DETERMINATION MODEL TRAINING DATA (INDIVIDUAL CELL OR MASSIVE CELL)

INDIVIDUAL CELL

MASSIVE CELL

## FIG. 6

1B

CELL CLASSIFICATION APPARATUS

10

ACQUISITION
SECTION

40

OUTPUT SECTION

20

DETERMINATION
SECTION

50

CONTROL SECTION

51

PROCESSOR

30A

CLASSIFICATION
SECTION

31

TRAINED
CLASSIFICATION
MODEL

52

MEMORY

# FIG. 7

CLASSIFICATION MODEL TRAINING DATA (INDIVIDUAL CELL)

MALIGNANT

BENIGN

LEARNING

TRAINED
INDIVIDUAL CELL
CLASSIFICATION
MODEL ~31A

FIG. 8

CLASSIFICATION MODEL TRAINING DATA (MASSIVE CELL)

BENIGN

MALIGNANT

⬇ LEARNING

TRAINED MASSIVE
CELL
CLASSIFICATION
MODEL ～31B

FIG. 9

901

IMAGE INCLUDING SPECIMEN
CELL AS SUBJECT

902

STAINING INTENSITY IMAGE

903

MASSIVE CELL CANDIDATE

905

INDIVIDUAL CELL CANDIDATE REGION

904

CUTOUT

906

CELL DETECTION

907

CUTOUT

EP 4 600 643 A1

# FIG. 10

## INTERNATIONAL SEARCH REPORT

| International application No. |
|---|
| **PCT/JP2022/037602** |

| A. | CLASSIFICATION OF SUBJECT MATTER |
|---|---|

*G01N 33/48*(2006.01)i; *G06T 7/00*(2017.01)i
FI:    G01N33/48 M; G06T7/00 350B; G06T7/00 630

According to International Patent Classification (IPC) or to both national classification and IPC

| B. | FIELDS SEARCHED |
|---|---|

Minimum documentation searched (classification system followed by classification symbols)

G01N33/48; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 58-223868 A (KABUSHIKI KAISHA TOSHIBA) 26 December 1983 (1983-12-26) p. 1, upper right column, line 1 to p. 3, lower right column, line 12, fig. 1-6 | 1-4, 10-14, 20-21 |
| Y | | 5-9, 15-19 |
| Y | WO 2015/053393 A1 (KANAGAWA ACADEMY OF SCIENCE & TECHNOLOGY) 16 April 2015 (2015-04-16) paragraphs [0014]-[0035], [0155], [0168], fig. 41, 46 | 5, 15 |
| Y | WO 2020/152953 A1 (JSR CORP.) 30 July 2020 (2020-07-30) paragraphs [0019]-[0076], fig. 1-7 | 5-9, 15-19 |
| Y | JP 2021-519920 A (ONERA (OFFICE NATIONAL D'ETUDES ET DE RECHERCHES AEROSPATIALES)) 12 August 2021 (2021-08-12) paragraphs [0037]-[0068], fig. 1-5 | 6-9, 16-19 |
| Y | WO 2021/230000 A1 (SONY GROUP CORP.) 18 November 2021 (2021-11-18) paragraphs [0011]-[0038], fig. 1 | 6-9, 16-19 |
| A | WO 2022/102783 A1 (FUTURE UNIVERSITY HAKODATE) 19 May 2022 (2022-05-19) entire text, all drawings | 1-21 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/037602**

| Patent document cited in search report | | | Publication date (day/month/year) | Patent family member(s) | Publication date (day/month/year) |
|---|---|---|---|---|---|
| JP | 58-223868 | A | 26 December 1983 | (Family: none) | |
| WO | 2015/053393 | A1 | 16 April 2015 | (Family: none) | |
| WO | 2020/152953 | A1 | 30 July 2020 | US 2021/0327060 A1 paragraphs [0025]-[0082], fig. 1-7 | |
| JP | 2021-519920 | A | 12 August 2021 | US 2021/0012088 A1 paragraphs [0059]-[0113], fig. 1-5<br>WO 2019/186073 A1<br>EP 3775840 A1<br>FR 3079617 A1<br>KR 10-2020-0136004 A<br>CN 112088296 A | |
| WO | 2021/230000 | A1 | 18 November 2021 | (Family: none) | |
| WO | 2022/102783 | A1 | 19 May 2022 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011179924 A
- JP 2009175334 A

- US 20220028068 A1